(19) Europäisches Patentamt
European Patent Office
Office européen des brevets

(11) Veröffentlichungsnummer: **0 499 929 A2**

(12) # EUROPÄISCHE PATENTANMELDUNG

(21) Anmeldenummer: **92102159.8**

(51) Int. Cl.$^5$: **C08G 75/02**

(22) Anmeldetag: **10.02.92**

(30) Priorität: **22.02.91 DE 4105552**

(43) Veröffentlichungstag der Anmeldung:
**26.08.92 Patentblatt 92/35**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Schmidt, Manfred, Dr.**
**Erich-Klausener-Strasse 37**
**W-4150 Krefeld(DE)**
Erfinder: **Arlt, Wolfgang, Dr.**
**Schönwasserstrasse 230c**
**W-4150 Krefeld(DE)**
Erfinder: **Fischer, Thomas, Dr.**
**Emil-Feinendegenstrasse 2**
**W-4150 Krefeld(DE)**
Erfinder: **Tresper, Erhard, Dr.**
**Moerser Strasse 394**
**W-4150 Krefeld 1(DE)**
Erfinder: **Alewelt, Wolfgang, Dr.**
**Stratumer Feld 17**
**W-4150 Krefeld(DE)**

(54) **Verfahren zur Herstellung von hochmolekularen, gegebenenfalls verzweigten, Polyarylensulfiden.**

(57) Die Erfindung betrifft ein Verfahren zur Herstellung von hochmolekularen, gegebenenfalls verzweigten, Polyarylensulfiden (PAS), vorzugsweise Polyphenylensulfid (PPS), mit einem verminderten Gehalt an extrahierbaren oligomeren und monomeren Bestandteilen. Sie werden in einem polaren organischen Lösungsmittel durch Umsetzung von Alkalisulfiden und/oder Alkalihydrogensulfiden mit Dihalogenaromaten hergestellt, wobei die Alkalisulfide und/oder Alkalihydrogensulfide in wasserhaltiger schmelzflüssiger Form gegebenenfalls im Gemisch mit dem organischen Lösungsmittel über eine Düse dem Reaktionsgemisch zugeführt werden.

EP 0 499 929 A2

Die Erfindung betrifft ein Verfahren zur Herstellung von hochmolekularen, gegebenenfalls verzweigten, Polyarylensulfiden (PAS), vorzugsweise Polyphenylensulfid (PPS), mit einem verminderten Gehalt an extrahierbaren oligomeren und monomeren Bestandteilen. Sie werden in einem polaren organischen Lösungsmittel durch Umsetzung von Alkalisulfiden und/oder Alkalihydrogensulfiden mit Dihalogenaromaten hergestellt, wobei die Alkalisulfide und/oder Alkalihydrogensulfide in wasserhaltiger schmelzflüssiger Form gegebenenfalls im Gemisch mit dem organischen Lösungsmittel über eine Düse dem Reaktionsgemisch zugeführt werden.

Polyarylensulfide (PAS) und ihre Herstellung sind bekannt (z.B. US-A 3 354 129, EP-A 171 021).

PAS sind hochtemperaturbeständige Kunststoffe. Sie werden vorzugsweise auf dem Elektro-/Elektronik-Sektor eingesetzt. Derartige Anwendungen stellen hohe Anforderungen an die Reinheit und Beständigkeit eines Kunststoffs.

Die unter Abspaltung von Alkalihalogeniden gebildeten Polyarylensulfide können extrahierbare niedermolekulare Oligomere und Monomere enthalten.

Polyarylensulfide mit erhöhten Anteilen extrahierbarer Oligomerer und Monomerer können Nachteile bei der Spritzgußverarbeitung, beispielsweise bei der Herstellung Glasfaser- oder Mineral-gefüllter Compounds zeigen, beispielsweise Oberflächenstörungen an Formkörpern. Bei der thermoplastischen Verarbeitung zu Formkörpern können sogenannte Schwimmhäute am Rande der Formkörper infolge einer erhöhten Schmelzfließfähigkeit der oligomeren Anteile in der thermoplastischen Masse entstehen. Außerdem kann ein erhöhter Anteil an reaktiven Endgruppen wie SH- und Cl-Endgruppen im Polymer vorhanden sein, wodurch bei der thermoplastischen Verarbeitung verstärkte HCl-Ausgasung und ein erhöhter Elektrolytgehalt resultieren können.

Der Gehalt an reaktiven Endgruppen ist abhängig vom Molgewicht der Polyarylensulfide und vom Umfang der ablaufenden Nebenreaktionen.

Aus der EP-A 215 259 und EP-A 240 016 ist bekannt, niedermolekulare Oligomere und Monomere zu extrahieren (z.B. mit Methylenchlorid).

Aus der EP-A 240 016 ist bekannt, aus dem heißen Reaktionsgemisch zunächst abgeschiedenes festes Polymer abzutrennen und anschließend mit dem gleichen Lösungsmittel, das bei der Reaktion verwendet wurde bei Temperaturen von mindestens 50 °C mehrmals zu waschen. Oligomere Anteile und Monomere können dabei extrahiert werden.

Es ist weiterhin bekannt, zur Erreichung hoher Molgewichte Polymerisationshilfsmittel zuzusetzen. So beschreibt EP-A 0 325 061 die Zugabe von Alkalicarboxylaten, EP-A 281 406 die Zugabe von $CaCl_2$, EP-A 306 025 die Zugabe von LiCl und $CaCl_2$ sowie EP-A 0 302 218 die Zugabe von Metallchloriden, Metallcarbonaten oder Metallcarboxylaten als Polymerisationshilfsmittel in Mengen bis 4,5 Mol/Mol Alkalisulfid.

Die Zugabe derartiger Polymerisationshilfsmittel ist unwirtschaftlich, da dadurch die Raum/Zeit-Ausbeute an Polyarylensulfid erniedrigt wird und das Polymerisationshilfsmittel die Materialkosten erhöht.

Es wurde nun ein Verfahren zur Herstellung von Polyarylensulfiden (PAS), vorzugsweise Polyphenylsulfid (PPS), gefunden, bei dem Polymere erhalten wurden, die weniger als 2,1 Gew,-% mit Methylenchlorid extrahierbarer oligomerer und monomerer Anteile haben. Sie haben ein einheitliches Molekulargewicht (geringe Uneinheitheitlichkeit der Molgewichtsverteilungskurve) und enthalten weniger als 5 ppm anorganisches Chlor. Die Polyarylensulfide haben hohe Molgewichte, die erfindungsgemäß ohne Zusatz eines Polymerisationshilfsmittels erhalten wurden.

Gegenstand der Erfindung ist ein Verfahren zur Herstellung von hochmolekularen, gegebenenfalls verzweigten, Polyarylensulfiden, vorzugsweise Polyphenylensulfiden, aus

a) einem oder mehreren Dihalogen(hetero)aromaten der Formeln (I) und/oder (II),

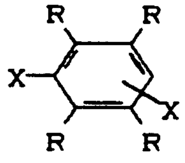 (I), 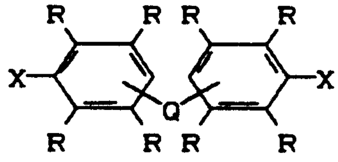 (II),

in denen

X für Halogen wie Chlor oder Brom steht,

R gleich oder verschieden sind und Wasserstoff, $C_1$-$C_{20}$-Alkyl, $C_4$-$C_{20}$-Cycloalkyl, $C_6$-$C_{24}$-Aryl,

$C_7$-$C_{24}$-Alkylaryl und $C_7$-$C_{24}$-Arylalkyl sein können, wobei zwei zueinander ortho-ständige Reste R zu einem aromatischen oder heterocyclischen Ring mit bis zu drei Heteroatomen wie N, O oder S verknüpft sein können,

und

Q für eine chemische Bindung, für zweibindige Gruppen wie -Ar-, -O-, -S-, -SO-, $-SO_2-$, $-(CR_2)_m-$, -CO-, -CO-Ar-CO-, -CO-NH-, -CO-NH-Ar-NH-CO- steht,
wobei R die oben angegebene Bedeutung hat, Ar einen zweibindigen $C_6$-$C_{24}$-Aromaten bedeutet, m eine ganze Zahl von 1 bis 24 ist

und

b) 0 bis 50 Mol-%, bevorzugt 0 bis 1,25 Mol-%, bezogen auf die Summe der Dihalogenaromaten der Formel (I) und/oder (II), eines Tri- oder Tetrahalogenaromaten der Formel (III),

$ArX_n$ (III),

in welcher

Ar ein aromatischer oder heterocyclischer Rest mit 6 bis 24 Ringatomen ist, wobei bis zu drei Ring-C-Atome durch Heteroatome wie N, O, S ersetzt sein können,

X für Halogen wie Brom oder Chlor steht und

n für die Zahlen 3 oder 4 steht,

und

c) 50 bis 100 Mol-% Alkalisulfid wie Natrium- oder Kaliumsulfid und 0 bis 50 Mol-% Alkalihydrogensulfid wie Natrium- oder Kaliumhydrogensulfid, wobei das molare Verhältnis von (a + b) : c im Bereich von 0,75:1 bis 1,15:1, vorzugsweise 0,90:1 bis 1,1:1 liegt,

d) in einem organischen Lösungsmittel, gegebenenfalls unter Mitverwendung von Cosolventien, dadurch gekennzeichnet, daß das molare Verhältnis von c) zu dem organischen Lösungsmittel d) im Bereich von 1:3,4 bis 1:1,0, vorzugsweise im Bereich von 1:2,6 bis 1:1,3 liegt, daß die Umsetzung durch Vermischen von wasserhaltigem Alkalisulfid und/oder Alkalihydrogensulfid-Lösungen mit Lösungen der Dihalogenaromaten in einem organischen Lösungsmittel bei Temperaturen oberhalb 212 °C erfolgt, der Wassergehalt der Reaktionslösung 0,02 Gew.-% nicht überschreitet und nicht umgesetzte Halogenaromaten der Formeln (I), (II) und (III) kontinuierlich oder zum Ende der Reaktion aus dem Reaktionsgemisch entfernt werden, und daß die wasserhaltigen Alkalisulfid- und/oder Alkalihydrogensulfid-Lösungen über eine Düse bei erhöhter Temperatur in das Reaktionsgemisch derart eingetragen werden, daß sich eine mittlere Teilchengröße der wäßrigen Alkalisulfid- und/oder Hydrogensulfidteilchen von <800 µm, vorzugsweise von <400 µm ergibt.

Eine modifizierte Form des Verfahrens beinhaltet die Verwendung einer Zweistoffdüse wie beispielsweise einer Ringkanaldüse, wobei in der Düse die wasserhaltige Alkalisulfid- und/oder Alkalihydrogensulfid-Lösungen mit einer Teilmenge des organischen Lösungsmittels gemischt werden und feinverteilt in das Reaktionsgemisch bei Temperaturen von 100 bis 300 °C, bevorzugt 130 bis 240 °C, eingetragen werden.

Das Verfahren kann diskontinuierlich oder kontinuierlich durchgeführt werden.

Beispiele für erfindungsgemäß einsetzbare Dihalogenaromaten der Formel (I) sind 1,4-Dichlorbenzol, 1,4-Dibrombenzol, 1-Brom-4-chlorbenzol, 1,3-Dichlorbenzol, 1,3-Dibrombenzol, 1-Brom-3-chlorbenzol, 2,5-Dichlortoluol, 2,5-Dichlorxylol, 1,4-Dichlor-2-ethylbenzol, 1,4-Dibrom-2-ethylbenzol, 1,4-Dichlor-2,3,5,6-tetramethylbenzol, 1,4-Dichlor-2-cyclohexylbenzol, 2-Benzyl-1,4-dichlorbenzol, 2,4-Dichlortoluol, 2,4-Dichlorxylol, 2,4-Dichlorcumol, vorzugsweise 1,4-Dichlorbenzol, 1,3-Dichlorbenzol und 2,5-Dichlortoluol.

Beispiele für erfindungsgemäß einsetzbare Dihalogenaromaten der Formel (II) sind 4,4'-Dichlordiphenyl, 4,4'-Dibromdiphenyl, 4,4'-Dichlorbenzophenon, 3,3'-Dichlorbenzophenon, 4,4'-Dichlordiphenylsulfon, 1,4-Bis-(4'-chlorbenzoyl)benzol, 1,4-Bis-(4'-chlorbenzoyl)-benzol, vorzugsweise 4,4'-Dichlordiphenyl, 4,4'-Dichlordiphenylsulfon und 4,4'-Dichlorbenzophenon.

Die Dihalogenaromaten der Formeln (I) und/oder (II) sind allein oder im Gemisch miteinander einsetzbar.

Beispiele für erfindungsgemäß einsetzbare Tri- oder Tetrahalogenaromaten der Formel (III) sind 1,2,4-Trichlorbenzol, 1,3,5-Trichlorbenzol, 2,2',4,4'-Tetrachlordiphenyl, 2,2',4,4'-Tetrachlordiphenylsulfid, 1,3,5-Trichlortriazin, 1,2,6-Trichlornaphthalin und 1,3,5-Tris(4-chlorphenyl)benzol.

Die Alkalisulfide werden in üblichen Mengen und in üblicher Weise eingesetzt. Es können z.B. Natrium- und Kaliumsulfide eingesetzt werden, die aus den Hydrogensulfiden mit Natrium- oder Kaliumhydroxid hergestellt werden. Sie enthalten 1 bis 9 Mol Wasser pro Mol Sulfid und werden als Schmelze eingesetzt.

Als Hydrogensulfide sind Natrium- oder Kaliumhydrogensulfide geeignet. Sie können aus Hydroxiden und Schwefelwasserstoff hergestellt werden. Ebenso ist es möglich, sie aus Sulfiden mit Schwefelwasserstoff herzustellen. Sie können 1 bis 4 Mol Wasser enthalten.

Gemeinsam mit den Alkalisulfiden und/oder Alkalihydrogensulfiden können bis 1,0 Mol-% (bezogen auf 100 Mol-% Dihalogenaromaten der Formel (I) und/oder (II)) an kettenabbrechenden Monohydroxyaromaten wie beispielsweise Phenol, 4-Hydroxydiphenylsulfid, 4-Hydroxydiphenyl oder 4-Hydroxydiphenylsulfon eingesetzt werden.

Erfindungsgemäß geeignete organische Lösungsmittel sind aprotische Lösungsmittel, insbesondere N-alkylierte Lactame, beispielsweise N-Methylpyrrolidon, N-Ethylpyrrolidon, N-Methylpiperidon, N-Isopropylpyrrolidon, N-Methylcaprolactam, disubstituierte cyclische Harnstoffe, beispielsweise N,N-Dimethylpyrimidazolidinon (auch N,N-Dimethylpropylenharnstoff genannt), N,N'-Dimethylimidazolidinon. Der Siedepunkt der Lösungsmittel liegt bei 212°C bis 280°C, vorzugsweise 212°C bis 242°C. Zur Erreichung des Temperaturbereiches kann die Reaktion unter leichtem Überdruck (bis zu 1 bar) durchgeführt werden.

Als Cosolventien können beispielsweise N,N-Dialkylaminocarbonsäuren oder N-Alkylaminocarbonsäuren von $C_1$-$C_8$-aliphatischen und $C_6$-$C_{12}$-aromatischen Carbonsäuren in einer Menge von 0,02 bis 19 Mol-%, bezogen auf Sulfid, eingesetzt werden. Vorzugsweise können N,N-Dimethylacetamid, N,N-Diethylacetamid, N,N-Dimethylpropionamid oder N-Alkylcarbonsäuren wie beispielsweise N-Methylcapronsäure eingesetzt werden. Auch Aminobuttersäure ist als Cosolvens einsetzbar.

Bei der erfindungsgemäß bevorzugten Durchführung des Verfahrens wird das Lösungsmittel, die Halogenaromaten der Formel (I) und (II) und/oder (III) gegebenenfalls mit den Cosolventien im Reaktor vorgelegt und die wasserhaltigen Hydrogensulfide und/oder Sulfide gleichzeitig oder nacheinander gegebenenfalls mit kettenabbrechenden Monohydroxyaromaten (z.B. Phenol) der Reaktionsmischung über eine Einstoffdüse zugeführt. Als bevorzugte Ausführungsform wird eine temperierbare Einstoff-Vollkegeldüse aus Materialien wie Zirkon, Tantal, Platin oder dem Stahl 1.4575 ("superferrit" der Fa. Thyssen, BRD) eingesetzt. In einer modifizierten Form des erfindungsgemäßen Verfahrens werden temperierbare Zweistoffdüsen, wie z.B. Ringkanaldüsen ebenfalls aus Zirkon, Tantal, Platin oder Stahl 1.4575 eingesetzt, wobei die wasserhaltige Schmelze der anorganischen sulfidischen Reaktionskomponente im Gemisch mit dem organischen Lösungsmittel in der Düse vereinigt, innig gemischt und in Form kleiner Partikel dem Reaktionsgemisch zugeführt werden.

Die Verwendung solcher Zerstäuberdüsen mit Flüssigkeitsvordruck erlaubt eine einheitlichere und raschere Reaktion zwischen der feinverteilten anorganischen sulfidischen Reaktionskomponente und der organischen Halogenaromat-Reaktionskomponente infolge der hierdurch möglichen Vergrößerung der reaktiven Oberfläche der anorganisch-sulfidischen Reaktionskomponente. Diese rasche Reaktion führt zu Polyarylensulfiden hohen Molgewichts und hoher Reinheit.

Hierbei ist die Temperatur des Reaktionsgemisches größer als 212°C. Die Entwässerung erfolgt spontan unter Rückführung der azeotrop abdestillierenden Halogenaromaten der Formel (I), (II), (III). Der Wassergehalt des Reaktionsgemisches beträgt 0 bis 0,02 Gew.-%.

Die Reaktionszeit kann variieren von weniger als einer Stunde bis zu 40 Stunden. Besonders bevorzugt kann sie 2 bis 24 Stunden betragen. Nicht umgesetzte Halogenaromaten der Formeln (I), (II) und (III) werden aus dem Reaktionsgemisch beispielsweise während der Reaktion oder gegen Reaktionsende destillativ abgetrennt.

Die Isolierung der Polyarylensulfide erfolgt beispielsweise durch Abkühlen, Filtern und Waschen des Reaktionsgemisches zunächst mit Ketonen wie Aceton oder Alkoholen wie Methanol, Ethanol oder Isopropanol. Der verbleibende Rückstand wird in Wasser im Verhältnis 1 Teil Rückstand zu 5 bis 20 Teilen Wasser suspendiert, die erhaltene Suspension mit Säuren wie beispielsweise Essigsäure, Salzsäure, Phosphorsäure, Schwefelsäure auf pH = 1-5 gestellt und anschließend mit Wasser neutral gewaschen.

Die so hergestellten Polyarylensulfide enthalten weniger als 2,1 Gew.-% mit Dichlormethan extrahierbare oligomere und monomere Anteile. Sie haben ein einheitliches Molekulargewicht. Sie enthalten weniger als 5 ppm anorganisches Chlor. Eine sonst übliche oxidative thermische Nachbehandlung und zusätzliche Reinigung durch Extraktionsmethoden kann entfallen.

Die Bestimmung der Schmelzviskositäten der erfindungsgemäß hergestellten Polyarylensulfide als Maß für das Molekulargewicht erfolgt z.B. bei 310°C in einem Hochdruckkapillarviskosimeter nach DIN 54 811. Es wird der Schmelzviskositätswert bei $\tau$ = 1000 $sec^{-1}$ als Vergleichswert gewählt. Vgl. Tabelle 1.

Zur Bestimmung der extrahierbaren Anteile werden 100 g der getrockneten Polyarylensulfide zweimal mit je 800 ml (= 1.070 g) Methylenchlorid extrahiert, der Extrakt eingeengt und ausgewogen. Aus dem Extrakt können Reste des bei der Reaktion verwendeten Lösungsmittels und Reste eingesetzter Monomere sowie in Nebenreaktionen gebildete Monomere wie Dibenzothiophen und 4-Chlordiphenylether mittels Gaschromatographie bestimmt werden. Der verbleibende Rest nach Eindampfen des Lösungsmittels und Abzug der Gewichtsmengen von Monomeren ist die extrahierbare Oligomerenmenge.

Die Bestimmung der Molgewichtsverteilung erfolgt z.B. durch Hochtemperatur-Gelpermeationschromatographie einer 0,05 gew.-%igen Lösung des Polyarylensulfids in N-Methylcaprolactam bei 185 °C an Silicagelsäulen.

Die Uneinheitlichkeit $U_1$ eines Polymers ist definiert als die Differenz zwischen dem Quotienten aus Gewichtsmittelmolekulargewichten $M_w$ und Zahlenmittelmolekulargewicht $M_n$ und der Zahl 1.

$$U_1 = \frac{M_w}{M_n} - .1$$

Die Bestimmung der Gehalte an anorganischem Chlor in den Polyarylensulfiden erfolgt z.B. durch argentometrische Titration.

Die erfindungsgemäß hergestellten Polyarylensulfide können mit anderen anorganischen oder organischen Oligomeren oder Polymeren, mit Pigmenten und Füllstoffen, beispielsweise Ruß, Graphit, Metallpulver, Glaspulver, Quarzmehl, Glimmer, Glas- und Kohlenstoffasern oder Fasern aus anderen anorganischen oder organischen Stoffen, mit üblichen anorganischen Füllstoffen aus der Reihe der Metalloxide oder Metallsulfate, mit anderen Zusatzstoffen, beispielsweise Stabilisatoren und/oder Entformungsmitteln versetzt werden.

Die erfindungsgemäß hergestellten Polyarylensulfide oder ihre Abmischungen können direkt durch Extrusion, Extrusionsblasen, Spritzgießen oder sonst üblichen Verarbeitungstechniken zu Folien, Formkörpern oder Fasern verarbeitet werden. Diese können in üblicher Weise Verwendung finden, z.B. als Automobilteile, Armaturen, Ventile, Kugellagerteile, Elektroteile wie z.B. Schalter, elektronische Tafeln, chemikalienresistente und verwitterungsstabile Teile und Apparateteile wie Pumpengehäuse und Pumpenflügelräder, Ätzbadschalen, Dichtungsringe, Teile von Büromaschinen, Fernmeldeeinrichtungen, Haushaltsgeräten usw..

Vorzugsweise werden die nach dem erfindungsgemäßen Verfahren hergestellten Polymeren zur Ummantelung von elektronischen Bauteilen wie beispielsweise Transistoren, Dioden und Mikrochips verwendet.

Beispiele

Beispiel 1

In einen 6 $m^3$-Reaktor werden unter Stickstoff 2331 kg (18,35 kMol) N-Methylcaprolactam (NMC) und 1197 kg (8,14 kMol) 1,4-Dichlorbenzol vorgelegt und auf 214 °C erwärmt. Innerhalb von 6,5 Stunden wird eine 140 °C warme Schmelze von 625,3 kg (8,02 kMol) Natriumsulfid, 5,6 kg (0,1 kMol) Natriumhydrogensulfid, 208 kg (1,44 kMol) N-Methylcapronsäure, 7,65 kg (0,08 kMol) Phenol (= 0,5 Mol-% bezogen auf 1,4-Dichlorbenzol) und 522 kg (20 kMol) Wasser über eine auf 140 °C beheizte Vollkegeldüse aus Zirkon mit 2 mm Düsendurchmesser unter Rühren und azeotroper Entwässerung des Reaktionsgemisches bei einer Reaktionsgemischtemperatur von 214 bis 220 °C eindosiert, wobei sich eine mittlere Teilchengröße von 300 µm ergibt. Eingesetzt wurden ein Natriumsulfidtrihydrat sowie ein Natriumhydrogensulfid mit 30 Gew.-% Wasseranteil. Das Molverhältnis von Mol Schwefelspender (= 8,12 kMol) zu Mol Lösungsmittel (= 18,35 kMol) ist 1:2,26. Das Molverhältnis Mole Dichlorbenzol zu Molen (Natriumsulfid + Natriumhydrogensulfid) ist 1:0,9975. Das mit dem Wasser azeotrop abdestillierende 1,4-Dichlorbenzol wird kontinuierlich in den Reaktor zurückgeführt. Anschließend wird 4 Stunden unter Rückflußsieden erhitzt, wobei die Temperatur des Reaktionsgemisches auf 235 °C ansteigt. Es werden dann 70 kg N-Methylcaprolactam und 50 kg 1,4-Dichlorbenzol abdestilliert und die Reaktion weitere 4 Stunden bei 238 bis 240 °C unter Rühren und 0,1 bar Stickstoffüberdruck fortgeführt. Man entnimmt das Reaktionsgemisch dem Reaktor, läßt unter Stickstoffatmosphäre auf 70 °C abkühlen, vermischt mit 1,4 to Isopropanol unter Rühren, filtriert Salz und Polymer ab, wäscht diese mit 0,6 to Isopropanol zur Entfernung des Lösungsmittels NMC, suspendiert den Rückstand in 6 to Wasser, säuert die Suspension mit 78 %iger Schwefelsäure auf pH = 2,5 an und filtriert das Polymer ab. Man wäscht mit Wasser elektrolytfrei und trocknet im Vakuum (120 °C, 12 Stunden).

Die Mengenangaben wurden auf Reinsubstanzmengen umgerechnet. Dies gilt auch für die Folgebeispiele.

Ausbeute: 800,6 kg (= 95 % bezogen auf eingesetztes Dichlorbenzol). Die vergleichenden analytischen Kenndaten sind der Tab. 1 zu entnehmen.

Beispiel 2

In einem Reaktor wie in Beispiel 1 beschrieben werden unter Stickstoff 1836 kg (14,46 kMol) NMC und 1093 kg (7,435 kMol) 1,4-Dichlorbenzol bei 214 °C vorgelegt. Innerhalb von 6,0 Stunden wird eine 130 °C warme Schmelze von 504 kg (6,462 kMol) Natriumsulfid, 3,7 kg (66 Mol) Natriumhydrogensulfid, 0,7 kg (7,4 Mol) Phenol (= 0,05 Mol-% bezogen auf 1,4-Dichlorbenzol), 175 kg (1,2066 kMol) N-Methylcapronsäure und 563 kg (31,28 kMol) Wasser über eine auf 210 °C beheizte Vollkegeldüse aus Zirkon mit 2 mm Düsendurchmesser unter Rühren und azeotroper Entwässerung des Reaktionsgemisches bei einer Reaktionsgemischtemperatur von 215 bis 221 °C eindosiert, wobei sich eine mittlere Teilchengröße von 300 µm ergibt. Das Molverhältnis von Mol Schwefelspender (6,528 Mol) zu Mol Lösungsmittel (14,46 Mol) ist 1:2,215, Das Molverhältnis von Mole Dichlorbenzol zu Molen (Natriumsulfid + Natriumhydrogensulfid) ist 1:1,139. Es wird die Reaktion wie unter Beispiel 1 fortgeführt, wobei nach 4 Stunden Reaktionszeit 60 kg NMC und 46 kg 1,4-Dichlorbenzol abdestilliert werden. Die Aufarbeitung des Reaktionsgemisches erfolgt analog Beispiel 1. Man erhält 735 kg (95,5 % bezogen auf Dichlorbenzol) Polyphenylensulfid. Vergleichende analytische Kenndaten: vgl. Tab. 1.

Beispiel 3

In einem 6 $m^3$-Reaktor werden unter Stickstoff 1920 kg (15,12 kMol) NMC und 1199 kg (8,1565 kMol) 1,4-Dichlorbenzol bei 212 °C vorgelegt. Innerhalb von 6,0 Stunden wird eine 130 °C warme Schmelze von 480 kg (6,154 kMol) Natriumsulfid, 165 kg (2,946 kMol) Natriumhydrogensulfid, 770 g (8,1 Mol) Phenol (= 0,05 Mol-% bezogen auf 1,4-Dichlorbenzol) und 695 kg (38,61 kMol) Wasser über eine auf 150 °C geheizte Vollkegeldüse aus Zirkon mit 1,8 mm Düsendurchmesser unter Rühren und azeotroper Entwässerung des Reaktionsgemisches bei einer Reaktionsgemischtemperatur von 212 bis 220 °C eindosiert, wobei sich eine mittlere Teilchengröße von 250 µm ergibt. Das Molverhältnis von Mol Schwefelspender (6,154 + 2,946 = 9,1 kMol) zu Mol Lösungsmittel (15,12 kMol) ist 1:1,66. Die Reaktion wird wie unter Beispiel 1 fortgeführt, wobei nach 3,5 Stunden Reaktionsdauer bei 235 °C durch Destillation 70 kg NMC und 75 kg (0,51 kMol) 1,4-Dichlorbenzol dem Reaktionsgemisch entnommen werden. Man läßt wie in Beispiel 1 beschrieben weiter reagieren und arbeitet das Reaktionsgemisch analog Beispiel 1 auf. Man erhält 780 kg Polyphenylensulfid (= 94,5 % bezogen auf Dichlorbenzol).

Vergleichende Kenndaten: s. Tabelle 1.

Vergleichsbeispiel 1:

(Nicht erfindungsgemäße Variante zum direkten Vergleich)

In einem 6 $m^3$-Reaktor werden unter Stickstoff 2200 kg (17,32 kMol) NMC und 1190 kg (8,095 kMol) 1,4-Dichlorbenzol bei 214 °C vorgelegt. Innerhalb von 8,5 Stunden wird eine 140 °C warme Schmelze von 621,6 kg (7,97 kMol) Natriumsulfid, 5,6 kg (0,1 kMol) Natriumhydrogensulfid, 207 kg (1,43 kMol) N-Methylcapronsäure, 7,60 kg (0,08 kMol) Phenol (= 0,5 Mol-% bezogen auf 1,4-Dichlorbenzol) und 691 kg (38,38 kMol) Wasser durch ein auf 140 °C beheiztes Einleitungsrohr mit Innendurchmesser von 25 mm unter Rühren und azeotroper Entwässerung des Reaktionsgemisches bei einer Temperatur von 213 bis 220 °C eindosiert. Das Molverhältnis von Mol Schwefelspender (7,97 + 0,1 kMol = 8,07 kMol) zu Mol Lösungsmittel (17,32 kMol) ist 1:2,146. Das Molverhältnis Mol Dichlorbenzol zu Molen (Natriumsulfid + Natriumhydrogensulfid) ist 1:0,997. Das mit dem Wasser azeotrop abdestillierende Dichlorbenzol wird kontinuierlich in den Reaktor zurück geführt. Es wird 4 Stunden unter Rückflußsieden erhitzt bei 235 °C, anschließend 70 kg NMC und 55 kg 1,4-Dichlorbenzol abdestilliert und die Reaktion noch weitere 4 Stunden bei 238 °C bis 240 °C unter 0,1 bar Stickstoffüberdruck fortgeführt. Nach Aufarbeitung des Reaktionsgemisches wie unter Beispiel 1 erhält man 710,3 kg (= 92 % bezogen auf eingesetztes Dichlorbenzol) Polyphenylensulfid. Tab. 1 enthält die vergleichenden analytischen Kenndaten.

Vergleichsbeispiel 2

(Nicht erfindungsgemäße Variante zum direkten Vergleich)

In einem 6 $m^3$-Reaktor werden unter Stickstoff 1920 kg (15,12 kMol) NMC und 1199 kg (8,1565 kMol) 1,4-Dichlorbenzol bei 212 °C vorgelegt. Innerhalb von 9,0 Stunden wird eine 130 °C warme Schmelze von 480 kg (6,154 kMol) Natriumsulfid, 165 kg (2,946 kMol) Natriumhydrogensulfid, 770 g (8,1 Mol) Phenol (= 0,05 Mol-% bezogen auf 1,4-Dichlorbenzol) und 695 kg (38,61 kMol) Wasser durch ein auf 150 °C beheiztes Einleitungsrohr mit Innendurchmesser von 25 mm unter Rühren und azeotroper Entwässerung des Reaktionsgemisches bei einer Temperatur von 213 bis 220 °C eindosiert. Das Molverhältnis von Mol Schwefelspender (6,154 + 2,946 = 9,1 Mol) zu Mol Lösungsmittel (15,12 kMol) ist 1:1,66. Das Molverhältnis Mole Dichlorbenzol zu Molen (Natriumsulfid + Natriumhydrogensulfid) ist 1:1,1157. Das mit dem Wasser azeotrop abdestillierende Dichlorbenzol wird kontinuierlich in die Reaktion zurückgeführt. Man erhitzt 4 Stunden bei 235 °C und 0,1 bar Stickstoffüberdruck, destilliert 60 kg NMC und 82 kg Dichlorbenzol ab, erhitzt weitere 6 Stunden bei 238 bis 240 °C und arbeitet das Reaktionsgemisch analog Beispiel 1 auf.

Man erhält 751 kg Polyphenylensulfid (= 91,5 % bezogen auf Dichlorbenzol). Tab. 1 enthält die vergleichenden analytischen Kenndaten.

**Tabelle 1**

| Bsp. | ηm 310°C, HDK* bei τ=1000 $sec^{-1}$ (DIN 54811) (Pa.s) | Analyse anorg. Cl (ppm) | org. Cl (%) | Gehalt an Dibenzothiophen. (ppm) | mit Dichlormethan extrahierbare Oligomere | HTGPC: $M_w$ | $M_n$ | $U_1$ | Gesamtreaktionszeit (Std.) |
|---|---|---|---|---|---|---|---|---|---|
| 1 | 76 | <5 | 0,06 | <2 | 1,9 Gew.-% | 42740 | 7540 | 4,67 | 14,5 |
| 2 | 295 | <5 | 0,04 | <2 | 1,1 Gew.-% | 82750 | 10400 | 6,96 | 14,0 |
| 3 | 286 | <5 | 0,035 | <2 | 1,0 Gew.-% | 82140 | 10600 | 6,75 | 13,5 |
| Vergleichsbeispiele (<u>ohne</u> $Na_2S$-Schmelzeverdüsung): | | | | | | | | | |
| 1 | 55 | 21 | 0,13 | 12 | 2,6 Gew.-% | 48200 | 7030 | 5,86 | 16,5 |
| 2 | 88 | <5 | 0,11 | 10 | 2,1 Gew.-% | 57330 | 7610 | 6,53 | 19,0 |

*) HDK = Hochdruckkapillarviskosimetrie

**Patentansprüche**

1. Verfahren zur Herstellung von hochmolekularen, gegebenenfalls verzweigten Polyarylensulfiden aus
   a) einem oder mehreren Dihalogen(hetero)aromaten der Formeln (I) und/oder (II),

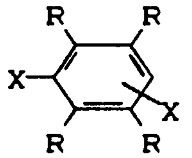 (I), 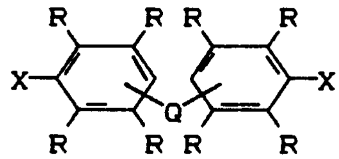 (II),

in denen

X für Halogen wie Chlor oder Brom steht,

R gleich oder verschieden sind und Wasserstoff, $C_1$-$C_{20}$-Alkyl, $C_4$-$C_{20}$-Cycloalkyl, $C_6$-$C_{24}$-Aryl, $C_7$-$C_{24}$-Alkylaryl und $C_7$-$C_{24}$-Arylalkyl sein können, wobei zwei zueinander orthoständige Reste R zu einem aromatischen oder heterocyclischen Ring mit bis zu drei Heteroatomen wie N, O oder S verknüpft sein können,

und

Q für eine chemische Bindung, für zweibindige Gruppen wie -Ar-, -O-, -S-, -SO-, $-SO_2-$, $-(CR_2)_m-$, -CO-, -CO-Ar-CO-, -CO-NH-, -CO-NH-Ar-NH-CO- steht, wobei R die oben angegebene Bedeutung hat, Ar einen zweibindigen $C_6$-$C_{24}$-Aromaten bedeutet, m eine ganze Zahl von 1 bis 24 ist

und

b) 0 bis 5 Mol-% bezogen auf die Summe der Dihalogenaromaten der Formel (I) und/oder (II), eines Tri- oder Tetrahalogenaromaten der Formel (III),

$ArX_n$ (III),

in welcher

Ar ein aromatischer oder heterocyclischer Rest mit 6 bis 24 Ringatomen ist, wobei bis zu drei Ring-C-Atome durch Heteroatome wie N, O, S ersetzt sein können,

X für Halogen wie Brom oder Chlor steht und

n für die Zahlen 3 oder 4 steht,

sowie 0 bis 30 Mol-%, bezogen auf Halogenaromaten der Formel I, II und III an kettenabbrechenden Monohydroxyaromaten der Formel IV; (IV) HO-Ar-R, wobei Ar die Bedeutung der Formel III und R = H, $C_1$-$C_8$-Alkyl, $C_6$-$H_5$, $-S-C_6H_5$, $-SO_2-C_6H_5$ oder $-CO-C_6H_5$ sein kann

und

c) 50 bis 100 Mol-% Alkalisulfid wie Natrium- oder Kaliumsulfid und 0 bis 50 Mol-% Alkalihydrogensulfid wie Natrium- oder Kaliumhydrogensulfid, wobei das molare Verhältnis von (a + b) : c im Bereich von 0,75:1 bis 1,15:1 liegt,

d) in einem organischen Lösungsmittel, gegebenenfalls unter Mitverwendung von Cosolventien, dadurch gekennzeichnet, daß das molare Verhältnis von c) zu dem organischen Lösungsmittel d) im Bereich von 1:3,4 bis 1:1,0, vorzugsweise im Bereich von 1:2,6 bis 1:1,3 liegt, daß die Umsetzung durch Vermischen von wasserhaltigem Alkalisulfid und/oder Alkalihydrogensulfid-Lösungen mit Lösungen der Dihalogenaromaten in einem organischen Lösungsmittel bei Temperaturen oberhalb 212°C erfolgt, der Wassergehalt der Reaktionslösung 0,02 Gew.-% nicht überschreitet und nicht umgesetzte Halogenaromaten der Formeln (I), (II) und (III) kontinuierlich oder zum Ende der Reaktion aus dem Reaktionsgemisch entfernt werden, und daß die wasserhaltigen Alkalisulfid- und/oder Alkalihydrogensulfid-Lösungen gegebenenfalls mit den Monohydroxyaromaten der Formel (IV) über eine Düse bei erhöhter Temperatur in das Reaktionsgemisch derart eingetragen werden, daß sich eine mittlere Teilchengröße der wäßrigen Alkalisulfid- und/oder hydrogensulfidteilchen von <800 µm ergibt.

**2.** Verfahren nach Anspruch 1, dadurch gekennzeichnet, daß als organisches Lösungsmittel N-Methylpyrrolidon verwendet wird.

**3.** Verfahren nach Anspruch 1, dadurch gekennzeichnet, daß als organisches Lösungsmittel N-Methylcaprolactam verwendet wird.

4. Verfahren nach Anspruch 1, dadurch gekennzeichnet, daß als organisches Lösungsmittel N,N'-Dimethylpropylenharnstoff verwendet wird.

5. Verfahren nach Anspruch 1, dadurch gekennzeichnet, daß als Dihalogenaromaten der Formel (I) 1,4-Dichlorbenzol, 1,3-Dichlorbenzol und/oder 2,5-Dichlortoluol verwendet wird.

6. Verfahren nach Anspruch 1, dadurch gekennzeichnet, daß als Dihalogenaromaten der Formel (II) 4,4'-Dichlordiphenyl, 4,4'-Dichlorbenzophenon verwendet wird.

7. Verfahren nach Anspruch 1, dadurch gekennzeichnt, daß die mit dem Wasser azeotrop abdestillierenden Polyhalogenaromaten der Formel (I), (II) und/oder (III) kontinuierlich solange in das Reaktionsgemisch zurückgeführt werden, solange die wasserhalt'igen Alkalisulfidlösungen bei Temperaturen oberhalb 212°C in die Reaktionslösung eingetragen werden und solange die damit verbundene azeotrope Entwässerung des Reaktionsgemisches abläuft.

8. Verfahren nach Anspruch 1, dadurch gekennzeichnet, daß zur Verdüsung der Monohydroxyaromaten der Formel (IV) und der Reaktionskomponenten nach Anspruch 1c) die Vollkegeldüse aus Zirkon, Tantal, Platin oder Stahl besteht.

9. Verfahren nach Anspruch 1, dadurch gekennzeichnet, daß zur Verdüsung der Monohydroxyaromaten der Formel (IV) und der Reaktionskomponenten nach Anspruch 1c) die Zweistoffdüse aus Zirkon, Tantal, Platin oder Stahl 1.4575 besteht.

10. Verfahren nach Anspruch 1, dadurch gekennzeichnet, daß die Düse zur Eintragung der Reaktionskomponenten 1c) bei Temperaturen größer 100°C betrieben wird.